# EUROPÄISCHE PATENTSCHRIFT

(11) **EP 4 171 862 B1**
(45) Veröffentlichungstag und Bekanntmachung des Hinweises auf die Patenterteilung: **19.06.2024**
(21) Anmeldenummer: 21790775.7
(22) Anmeldetag: 27.05.2021
(51) Int. Cl.: B08B 15/00, B08B 15/04, B23K 26/10, B23K 26/12, B23K 26/142, B23K 26/36, B23K 26/16

(54) **LASERPLOTTER**
LASER PLOTTER
TRACEUR LASER

(30) Priorität: 29.06.2020 AT 505442020
(43) Veröffentlichungstag der Anmeldung: 03.05.2023
(73) Patentinhaber: Trotec Laser GmbH, 4614 Marchtrenk (AT)
(72) Erfinder: WÖGERBAUER, Ronald, 4600 Thalheim bei Wels (AT)
(86) Internationale Anmeldenummer: PCT/AT2021/060183
(87) Internationale Veröffentlichungsnummer: WO 2022/000005

(56) Entgegenhaltungen:
- EP-A2- 2 594 406
- CN-U- 207 239 466
- CN-U- 208 906 349
- DE-A1- 19 651 662
- DE-A1-102018 107 311
- DE-U1-202012 013 586
- JP-A- 2008 295 448
- US-A1- 2005 011 874
- US-B1- 6 984 803

## Beschreibung

Die Erfindung betrifft einen Laserplotter zum Abarbeiten eines Jobs für das Schneiden, Gravieren, Markieren und/oder Beschriften eines vorzugsweise flachen Werkstückes, der zumindest ein Gehäuse mit einem vorzugsweise verschließbaren Bearbeitungsraum zum Positionieren eines Werkstückes auf einem Bearbeitungstisch, zumindest eine Strahlquelle in Form eines Lasers, und eine Steuereinheit zum Steuern des über vorzugsweise einen Riemenantrieb betriebenen Schlittens mit daran verfahrbar angeordneter Fokussiereinheit, die zum Umlenken eines Laserstrahls in Richtung des Werstückes ausgebildet ist, aufweist, wobei im Bearbeitungsraum unterhalb des Bearbeitungstisches, insbesondere einer Auflagefläche des Bearbeitungstisches, eine Absaugvorrichtung zum Absaugen der beim Laserprozess entstehenden Abgase durch einen Luftstrom angeordnet ist, wie diese in den Ansprüchen 1 - 13 beschrieben sind.

Aus dem Stand der Technik sind bisher bei Laserplottern, bei denen die Absaugung der entstehenden Abgase vom Schneid- / Gravur-Prozess auf die unterschiedlichsten Arten erfolgt.

Einerseits sind Laserplotter bekannt, die über einen mit Riemenantrieb betriebenen Schlitten, an dem eine Fokussiereinheit ebenfalls verstellbar ist, ausgestattet sind. Vorzugsweise werden dabei flächige Werkstücke, wie Papier, Platten, Textilien, usw. über einen Laser, insbesondere Laserstrahl, bearbeitet. Damit die bei der Bearbeitung entstehende Abgase bzw. Dämpfe abzusaugen, sind am Schlitten Absaugvorrichtungen angeordnet. Dabei wird ein Absaugschlauch im Bereich der Fokussiereinheit angeordnet. Nachteilig ist hierbei, dass beim Einsatz eines Absaugschlauches an der Fokussiereinheit, dass damit die Beweglichkeit, insbesondere die Verfahrgeschwindigkeit der Fokussiereinheit mit dem befestigten Absaugschlauch, eingeschränkt wird.

Andererseits sind derartige Laserplotter bekannt, bei denen der Bearbeitungstisch durch eine Lochplatte oder Gitter oder Streben ausgebildet sind, wobei auf dem Bearbeitungstisch das Werkstück zum Schneiden oder Gravieren aufgelegt wird.

Unterhalb des Bearbeitungstisch ist ein Absaugrohr angeordnet, dass mit einer Absaugvorrichtung zum Absaugen der Abgase vom Werkstück verbunden ist, d.h., dass die Abgase nach unten Abgesaugt werden.

Nachteilig ist bei den aus dem Stand der Technik bekannten Verfahren, dass beim Schneiden bzw. Gravieren, insbesondere großer flacher Werkstücke, wie beispielsweise eine Plexiglasscheibe, nicht möglich ist, da zur Absaugung der entstehenden Gase diese nur über eine Absaugbalken, der oberhalb des Werkstückes angeordnet sein muss, möglich ist, sodass eine Integration der Absaugung in das Gehäuse des Laserplotters nicht möglich ist.

Aus der DE202012013586 U1 ist eine Laserbearbeitungsanlage bekannt, bei der eine Werkstückauflage vorgesehen ist, wobei unterhalb der Werkzeugauflage eine Absaugöffnung vorgesehen ist und mit einer Umhausung, welche die Werkstückauflage, die Laserbearbeitungseinheit und die mindestens eine Absaugöffnung von ihrer Außenumgebung abgrenzt und mindestens eine Lufteinströmöffnung aufweist.

Weiters sind Vorrichtungen zum Absaugen von Bearbeitungsrückständen und/oder Gasen bzw. Rauch aus der DE 19651662A1, JP200829544A und DE102018107311 A bekannt.

Ein Laserplotter zum Abarbeiten eines Jobs für das Schneiden, Gravieren, Markieren und/oder Beschriften eines Werkstückes ist aus der EP2594406A2 bekannt.

Aus der US 2005/011874 A1 und der US 6 984 803 B1 sind Laserplotter gemäß dem Oberbegriff des Anspruchs 1 bekannt.

Die Aufgabe der Erfindung liegt darin, ein Verfahren und einen Laserplotter zu schaffen, bei dem die obgenannten Nachteile vermieden werden und andererseits die Abgasführung wesentlich verbessert wird.

Die Aufgabe wird durch die Erfindung gelöst.

Die Aufgabe der Erfindung wird durch einen Laserplotter gemäß dem Anspruch 1 gelöst, bei dem der Bearbeitungstisch derart ausgebildet ist, dass die Auflagefläche des Bearbeitungstisches vollflächig und luftdicht ausgebildet ist, und dass zur Bildung eines Luststroms unterhalb der Auflagefläche vorzugsweise parallel zur Auflagefläche ein Absaugkanal angeordnet ist, der in einer Abzugsöffnung endet, wobei der Absaugkanal über zumindest eine Absaugöffnung mit dem Bearbeitungsraum zum Absaugen der beim Laserprozess entstehenden Abgase bzw. Dämpfe verbunden ist wobei der Bearbeitungsraum mit einem Rahmen begrenzt ist, und eine Abschlussplatte unterhalb des Rahmens angeordnet und vorzugsweise am Rahmen befestigt ist, wobei in dem Rahmen mehrere vorzugsweise parallel verlaufende Lamellen angeordnet sind, sodass zwischen den Lamellen ein Luftleitkanal ausgebildet ist, wobei sich die Lamellen von der Auflagefläche über den Rahmen erstrecken.

Vorteilhaft ist hierbei, dass dadurch ein bestimmter Luftstrom im Bearbeitungsraum in Richtung der Absaugöffnungen erzeugt wird. Gleichzeitig sind damit keinerlei störende Zusatzteile am Schlitten oder Schläuche vorhanden, sodass die Bearbeitungsgeschwindigkeit trotz gerichteten Absaugluftstrom nicht eingeschränkt werden muss, wie dies beim Stand der Technik oftmals notwendig ist.

Gleichzeitig wird erreicht, dass eine ausreichend große Absauganlage im Gehäuse des Laserplotters, die unterhalb des Bearbeitungsraumes angeordnet werden kann, integriert werden kann, da unterhalb des Bearbeitungsraumes ausreichend Platz vorhanden ist. Weiters ist von Vorteil, wenn der Bearbeitungsraum mit einem Begrenzungsrahmen begrenzt ist, und dass die Abschlussplatte unterhalb des Begrenzungsrahmens angeordnet und vorzugsweise am Begrenzungsraumen befestigt ist. Dadurch wird erreicht, dass damit über Randbereich keine Luft in den Kanal unterhalb der Auflagefläche des Bearbeitungstisches angesaugt werden kann. Damit wird nur über einen speziell dafür vorgesehenen Kanal ein Luftstrom in den Kanal erzeugt.

Von Vorteil ist eine Ausbildung, bei der parallel zur vollflächigen Auflagefläche eine Abschlussplatte angeordnet ist, die durch entsprechende Ausbildung den Absaugkanal bildet oder ein Absaugkanal angeordnet ist. Dadurch wird erreicht, dass einerseits eine Absaugung des Abgase nach unten verhindert wird, sodass diese parallel zur Auflagefläche in Richtung Abzugsöffnung gesaugt werden und andererseits ein kostengünstiger Aufbau erzielt wird. Durch die Ausbildung eines sogenannten doppelten Bodens, kann durch einfaches Anordnen eines Trennelementes der Absaugkanal gebildet werden.

Eine Ausbildung ist von Vorteil, bei der in der Abschlussplatte die Abzugsöffnung angeordnet ist, wobei der Absaugkanal vorzugsweise sich verjüngend zur Abzugsöffnung ausgebildet ist. Dadurch wird erreicht, dass sämtliche über die Absaugöffnungen in den Absaugkanal gesaugten Abgase zur Abzugsöffnung geleitet werden und dadurch sicher aus dem Bearbeitungsraum abgeführt werden.

Es sind aber auch die Merkmale von Vorteil, bei dem die Abschlussplatte in einer definierten Distanz zur Auflagefläche angeordnet ist. Dadurch wird erreicht, dass ein entsprechend dimensionierter Kanal unterhalb der Auflagefläche auf einfache Art und Weise geschaffen wird.

Es sind aber auch die Merkmale von Vorteil, bei denen der Absaugkanal im Begrenzungsrahmen und/oder zwischen Begrenzungsrahmen und Abschlussplatte integriert ist. Dadurch wird erreicht, dass nur über diesen Absaugkanal die Luft aus dem Bearbeitungsraum abgesaugt werden kann. Bevorzugt wird dabei der Absaugkanal im hinteren Randbereich angeordnet, damit die bei dem Laserbearbeitungsprozess entstehende Gas nach hinten gezogen werden und der User von vorne damit freie Sicht auf das eingelegte Werkstück hat.

Von Vorteil ist auch eine Ausbildung, bei der der Absaugkanal mit einem Absaugraum unterhalb der Abschlussplatte verbunden ist, wobei der Absaugraum mit der Absaugvorrichtung, insbesondere einen Absauggebläse zum Abführen des Luftstroms mit den Abgasen vom Laserprozess verbunden ist. Dadurch wird erreicht, dass ein einfacher Aufbau durch einen sogenannten doppelten Boden gebildet wird, wobei dieser dabei vorzugsweise in einem gewissen Bereich abgetrennt wird, sodass sich nicht über die gesamte Fläche zwischen Bearbeitungstisch und der Abschlussplatte die Gase ausbreiten können.

Es sind aber auch die Merkmale von Vorteil, bei denen der Absaugraum auf einen Teilbereich des Bearbeitungsraumes begrenzt ist. Dadurch wird erreicht, dass eine höhere Strömungsgeschwindigkeit erzielt wird.

Von Vorteil sind auch die Ausbildungen, dass die Absaugvorrichtung im Zentrum unterhalb des Bearbeitungstische positioniert ist und ein Teil des Bearbeitungsfläche über Absperrelemente abgetrennt ist. Dadurch wird erreicht, dass ausreichend Platz vorhanden ist und somit eine entsprechend dimensionierte Absaugvorrichtung, insbesondere Pumpe, eingebaut werden kann.

Es sind aber auch die Merkmale von Vorteil, bei denen die Auflagefläche des Bearbeitungstisch oberhalb des Begrenzungsrahmens angeordnet ist. Damit wird erreicht, dass die gesamte Bearbeitungsfläche genützt werden kann, da bei entsprechend großem Werkstück die Luft seitlich zwischen Werkstück und Begrenzungsrahmen zum Erzeugen des Luftstroms einströmen kann

Vorteilhaft ist auch eine Ausbildung, bei der die Luftleitkanäle, insbesondere die Lamellen, sich über eine Oberseite des Begrenzungsrahmens, insbesondere über eine Höhe von 5 bis 20mm, erstrecken. Dadurch wird erreicht, dass ein entsprechend großes Luftstromvolumen zwischen den Luftleitkanälen vorhanden ist, sodass gewährleistet ist, dass die entstehenden Abgase sicher abtransportiert werden.

Eine Ausbildung ist von Vorteil, bei der die Lamellen gleichmäßig über die Bearbeitungsbreite der Auflagefläche verteilt angeordnet sind. Dadurch wird erreicht, dass über die gesamte Fläche ein konstanter Abgasstrom erzielt wird.

Bei einer Ausbildung ist von Vorteil, dass die Lamellen aus Plexiglas gebildet sind.

Dadurch ist eine einfache kostengünstige Herstellung möglich. Gleichzeitig wird das einwirkende Gewicht auf dem Bearbeitungstisch reduziert.

Bei einer Ausbildung ist von Vorteil, bei der die Lamellen eine Dicke zwischen 2-10mm, vorzugsweise 5mm, aufweisen. Dadurch wird eine ausreichen Auflagefläche für Werkstücke erzielt.

Von Vorteil ist eine Ausbildung, bei der die Lamellen als eine Baueinheit ausgebildet ist, die in den Begrenzungsrahmen einlegbar und austauschbar ist. Dadurch kann die gesamte Lamelleneinheit in einen Arbeitsgang getauscht werden, sodass an die unterschiedlichsten Prozesse auch eine optimale Anpassung der Abgaskanäle vorgenommen werden kann. Beispielsweise kann beim Bearbeiten größerer Gegenstände, wie beispielsweise eine Plexiglasplatte der Lamellenabstand sehr groß gewählt werden, wogegen beispielsweise bei Gravieren eines Handys eine Lamelleneinheit mit geringen Lamellenabstand eingesetzt wird, um eine gute Auflagefläche für das Handy zu bilden.

Schließlich ist eine Ausbildung von Vorteil, bei der die Lamellen sich von der Auflagefläche bis zur Abschlussplatte erstrecken. Dadurch wird erreicht, dass die Abgase entlang der Lamellen bis zum Absaugkanal gefördert werden.

Die Erfindung wird anschließend in Form eines Ausführungsbeispiels beschrieben, wobei darauf hingewiesen wird, dass die Erfindung nicht auf das dargestellten und beschriebenen Ausführungsbeispiel bzw. Lösung begrenzt ist.

Es zeigen:
- Fig.1: eine schaubildliche Darstellung eines Laserplotters mit einer Abgasvorrichtung zum Absaugen der entstehenden Abgase während des Laserprozesses, in vereinfachter, schematischer Darstellung;
- Fig. 2: eine schaubildliche Darstellung in den Bearbeitungsraum des Laserplotters, mit Herausgenommenen Auflagefläche des Bearbeitungstisches, in vereinfachter schematischer Darstellung;
- Fig. 3: eine weitere schaubildliche Darstellung in den Bearbeitungsraum des Laserplotters mit vorhandener Auflagefläche, in vereinfachter schematischer Darstellung;
- Fig. 4: eine weitere schaubildliche Darstellung in den Bearbeitungsraum des Laserplotters mit eingesetzten Lamellen, in vereinfachter schematischer Darstellung;
- Fig. 5: eine weitere schaubildliche Darstellung in den Bearbeitungsraum des Laserplotters mit eingelegtem großflächigem Werkstück, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

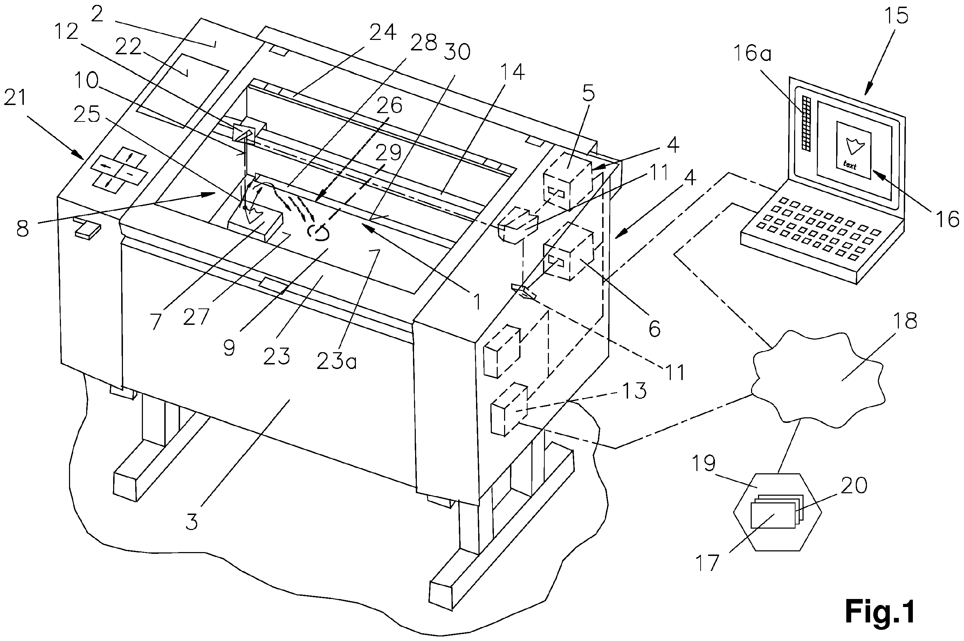

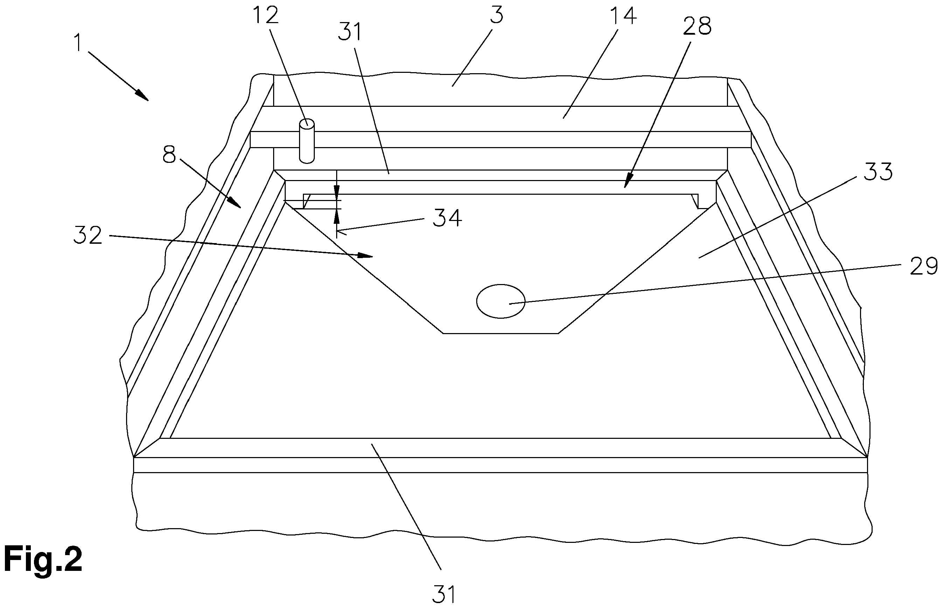

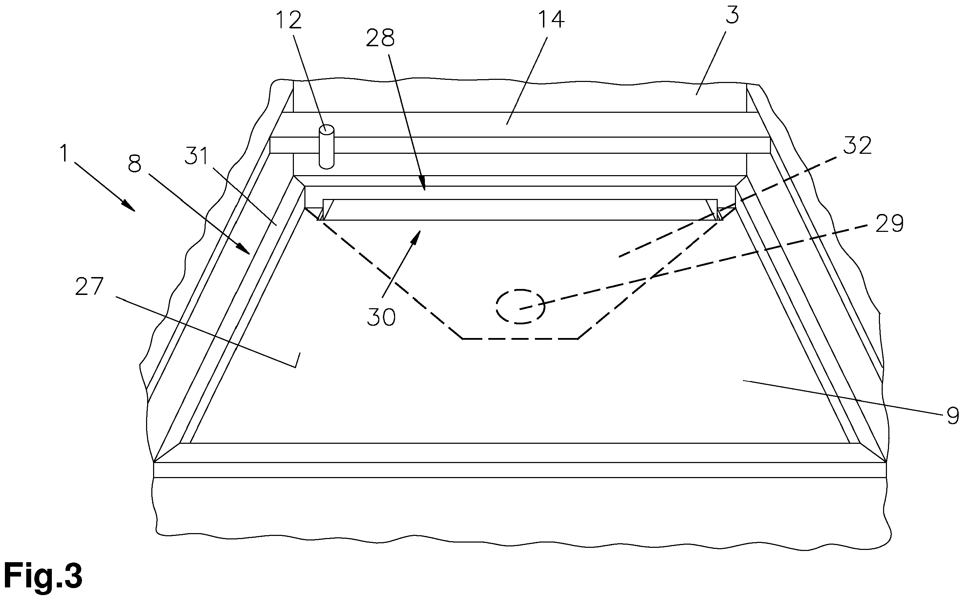

In den Fig. 1 bis 5 ist eine Anordnung einer Abgasvorrichtung 1 bei einem Laserplotter 2 gezeigt.

Gemäß Fig. 1 ist ein aus dem Stand der Technik bekannter Laserplotter 2 dargestellt, bei dem in einem Gehäuse 3 zumindest eine, insbesondere zwei Strahlenquellen 4 in Form von Lasern 5, 6 angeordnet und betrieben werden. Die Laser 5 und 6 wirken vorzugsweise abwechselnd auf das zu bearbeitende Werkstück 7 ein, wobei das Werkstück 7 in einem Bearbeitungsraum 8 des Laserplotters 2, insbesondere auf einem Bearbeitungstisch 9, der vorzugsweise in seiner Höhe verstellbar ist, positioniert ist. Ein von der Strahlenquelle 4 abgegebener Laserstrahl 10 wird über Umlenkelemente 11 an zumindest eine verfahrbare Fokussiereinheit 12 gesendet, von der der Laserstrahl 10 in Richtung Werkstück 7 abgelenkt wird und zur Bearbeitung fokussiert wird. Die Steuerung, insbesondere die Positionssteuerung des Laserstrahls 10 zum Werkstück 7 erfolgt über eine in einer Steuereinheit 13 laufende Software, wobei das Werkstück 7 bevorzugt zeilenweise durch Verstellung eines Schlittens 14, an dem auch die Fokussiereinheit 12 verfahrbar angeordnet ist, über vorzugsweise einem Riemenantrieb in X-Y-Richtung bearbeitet wird.

Dabei kann beispielsweise an einer externen Komponente 15, insbesondere einem Computer oder einem Steuergerät, eine Grafik 16 und/oder ein Text 16 über eine handelsübliche Software 16a, wie beispielsweise Coral-Draw, Paint, usw., erstellt, welche an die Steuereinheit 13 des Laserplotters 2 in Form eines Jobs exportiert bzw. übergeben wird, die eine Konvertierung der übergebenen Daten, insbesondere der Grafik 16 und/oder des Textes 16, zum Steuern der einzelnen Elemente des Laserplotters 2 vornimmt.

Vorzugsweise wird jedoch eine webbasierte Bedienersoftware 17 für die Erstellung eines Jobs eingesetzt, wobei hierzu die Komponente 15 oder direkt auch der Laserplotter 2 eine Verbindung mit dem Internet 18 und vorzugweise einer Cloud 19 herstellt. Anschließend kann über einen Browser die Bedienersoftware 17 aufgerufen werden und die Konfiguration vorgenommen werden, sodass anschließend von der Bedienersoftware 17 der Job erstellt wird. Dieser kann dabei in einer Job-Datenbank 20 in der Cloud 19 gespeichert werden, sodass dieser jederzeit von jedem beliebigen Standort auf der Welt aufgerufen werden kann. Dabei ist es auch möglich, dass direkt von der Job-Datenbank 20 ein Job zur Bearbeitung mit dem Laserplotter 2 heruntergeladen wird, wobei dies über die externe Komponente 15 oder direkt vom Laserplotter 2 über dessen Steuer- / Anzeigeelemente, insbesondere Touch-Screen, durchgeführt wird, wozu der Laserplotter 2, wie schematisch gezeigt, eine Verbindung mit dem Internet 18 und weiters mit der Cloud 19 herstellt.

Nachdem die Daten, insbesondere der erstellte Job, an dem Laserplotter 2 übertragen bzw. geladen sind, wird vom Laserplotter 2, insbesondere deren Steuerung 13, der Job abgearbeitet. Dabei ist es auch möglich, dass mehrere Jobs gleichzeitig im Laserplotter 2 gespeichert und nacheinander abgearbeitet werden können. Bei derartigen Laserplotter 2 war es bisher üblich, dass zum Starten eines abzuarbeitenden Jobs, ein Deckel 23, der vorzugsweise zumindest teilweise transparent 23a ausgebildet ist, vom Laserplotters 2 geschlossen werden muss. Anschließend kann das Bedienerpersonal den Laserpunkt bzw. ein Laser-Pointer, der vorzugsweise an der Fokussiereinheit 12 positioniert ist, manuell oder auch automatisch zum eingelegten Werkstück 7 positioniert, worauf der Job für die Bearbeitung des Werkstückes 7 gestartet werden kann. Anschließend kann das Bedienerpersonal über den vorzugsweise transparenten Deckel 17 den Schlitten 14 mit der Fokussiereinheit 12 beobachten, wie diese von der Steuervorrichtung 13 entsprechend dem hinterlegten Job verfahren und abgearbeitet wird. Um den Fortschritt des Laserprozesses einfach zu verfolgen, ist es möglich, dass der Laserplotter 2 mit einer Statusleiste 24 ausgestattet, sodass der Bediener nicht mehr durch den transparenten Deckel 17 in den bearbeitungsraum 8 schauen muss, sondern über die Statusleiste 24 den Fortschritt angezeigt bekommt, wozu die Statusleiste 24 unterschiedliche Segmente und/oder Farben aufweist. Am Ende des Jobs wird anschließend der Schlitten 14 in die Ausgangsposition verstellt und beendet.

Da bei der Bearbeitung des Werkstückes 7 mit dem Laserstrahl 10 eine Verdampfung des Materials sowohl beim Schneiden als auch beim Gravieren zur Folge, entstehen somit während des Laserprozess Abgase 25 bzw. Dämpfe 25, wie schematisch mit Pfeilen dargestellt sind, dargestellt. Diese Abgase 25 können dabei für Menschen schädlich sein, sodass es notwendig ist, dass Laserplotter 2 mit einer Absaugvorrichtung 1 ausgestattet sind, die die entstehenden Abgase bzw. Dämpfe 25 oder auch Rauch 25 aus dem Bearbeitungsraum 8 absaugt, sodass keine unangenehmen oder gefährliche Gerüche vom Bediener eingeatmet werden kann.

Erfindungsgemäß ist nunmehr eine Abgasvorrichtung 1 vorgesehen, bei der der Bearbeitungstisch 9 derart ausgebildet ist, dass sich ein Luststrom 26 unterhalb einer Auflagefläche 27 des Bearbeitungstisches 9 für das Werkstück 7 parallel zur Auflagefläche 27 ausbildet, d.h., dass die Abgase 25 von der Oberseite des Bearbeitungstisch 9 über einen Absaugöffnung 28 unterhalb des Bearbeitungstische 9 gesagt werden, wo sie über ein Abzugsöffnung 29 nach unten und anschließen über einen Kanal nach außen aus dem Gehäuse 3 befördert werden. Dabei ist es möglich, dass im Kanal für die Abgasreinigung ein Filter integriert sein kann, der die gefährlichen bzw. schädlichen Abgase 25 ausfiltert. Ein wesentlicher Unterschied zum Stand der Technik, bei dem die Auflagefläche 27 meist durch Lochplatten oder Gittern bzw. Stege ausgebildet sind, wodurch die Luft vom Bearbeitungsraum 9 einfach nach unten gesaugt werden kann, ist, dass nunmehr die Auflagefläche 27 des Bearbeitungstisches 27 vollflächig ausgebildet ist, wobei jedoch in einem bestimmten Bereich, insbesondere auf der Rückseite des Bearbeitungsraumes 8, die Absaugöffnung 28 des Bearbeitungstisches 9 und/oder eine Absaugöffnung 30 an einem dem Bearbeitungstisch 9 umgebenden Rahmen bzw. Abgrenzung 31, der die luftdichte Auflagefläche 27 des Bearbeitungstisches umgibt, ausgebildet ist. Diese Abgasöffnung 28,30 mündet dabei in einen unterhalb der Auflagefläche 27 ausgebildeten Absaugkanal 32, von dem die Abgase 25 über die Abzugsöffnung 29 und daran angeschlossene Rohre über einen Absaugpumpe nach außen gefördert werden, d.h., dass unterhalb des Bearbeitungstisches 9 eine Abschlussplatte 33 zum Verhindern einer Absaugung des Luftstroms 26 bzw. der Abgase 25 nach unten in das Gehäuse 3 des Laserplotters 2 angeordnet ist, und dass zwischen der Abschlussplatte 33 und dem Bearbeitungstisch 9, beziehungsweise der Auflagefläche 27, der Absaugkanal 32 unterhalb der Auflagefläche für das Werkstück 7 ausgebildet ist, der mit eine Abzugsöffnung 29 zum Abfördern der Abgase 25 verbunden ist.

Damit unterhalb des Bearbeitungstisch 9 ein Absaugkanal 32, in dem der Luftstrom 26 der Abgase 25 in Richtung Abzugsöffnung 29 ausgebildet werden kann, ist die Abschlussplatte 33 entsprechend ausgebildet. Vorzugsweise ist der Abzugskanal 32 nur auf einen Teilbereich des Bearbeitungsraums 8, insbesondere des Bearbeitungstisches 9, beschränkt, wobei hierzu ein Teilbereich der Abschlussplatte v-förmig ausgebildet ist, und der weitere Bereich um eine Höhe 34 vertieft ausgebildet, sodass sich eine Konzentration des Luftstroms 26 der Abgase 25 in Richtung der im Zentrum des vertieft ausgebildeten Bereiches angeordneten Abzugsöffnung 29 ausbildet.

Selbstverständlich ist es möglich, dass anstelle von einem v-förmig ausgebildeten vertieften Bereich der Abschlussplatte 33 auch ein oder mehrere Kanäle, die sich zur Abzugsöffnung erstrecken, ausgebildet sein können, wobei die Kanäle mit den Absaugöffnungen 28,30 in Verbindung stehen, um die Abgase 25 über die Auflagefläche 27, den Absaugöffnungen 28,30 zur Abzugsöffnung 29 zu fördern.

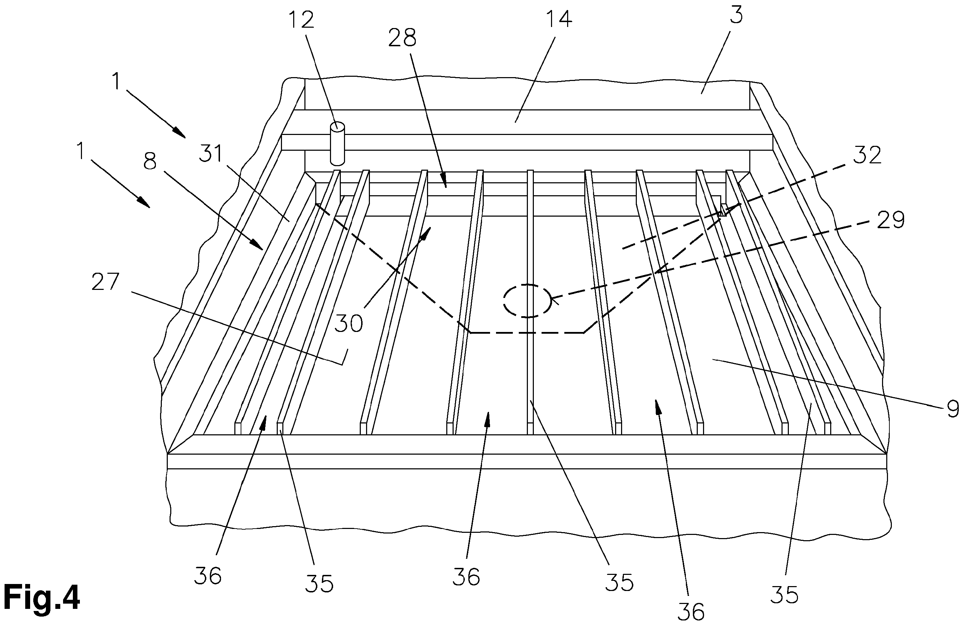

Um eine noch bessere Absaugung der Abgase 25, insbesondere beim Durschneiden des Werkstückes 7, zu erreichen, sind in den Rahmen 31 mehrere vorzugsweise parallel verlaufende Lamellen 35 angeordnet, sodass zwischen den Lamellen 35 ein Luftleitkanal 36 ausgebildet wird, der die Abgase 25 in Richtung der Absaugöffnung 28,30 leitet, wie dies in Fig. 4 am besten ersichtlich ist. Die Lamellen 35 sind dabei vorzugsweise aus Plexiglas ausgebildet und erstrecken von der Auflagefläche 27 über den Rahmen 31 hinaus, sodass diese vorzugsweise 5 bis 20 mm über den Rahmen 31 hinausragen. Die Lamellen 35 können dabei als Einzelelemente in den Rahmen 31 eingesetzt werden oder auch als gesamte Baueinheit, sodass alle Lamellen 35 in einem Arbeitsschritt entnommen oder positioniert werden können. Dabei ist es möglich, dass unterschiedlich ausgebildete Baueinheiten mit unterschiedlich hohen und breiten Lamellen 35, sowie unterschiedlich breite Luftleitkanäle 36 aufweisen können, sodass die verschiedensten Baueinheiten an die zu bearbeitende Werkstücke 7 angepasst werden können. Sollten jedoch EinzelLamellen 35 verwendet werden, so ist es von Vorteil, dass im Rahmen 31 entsprechende Einbuchtungen (nicht dargestellt) angeordnet sind, in die die Lamellen 35 eingesetzt werden. Auch können diese Einbuchtungen auch für die Positionierung der gesamten Baueinheit dienen.

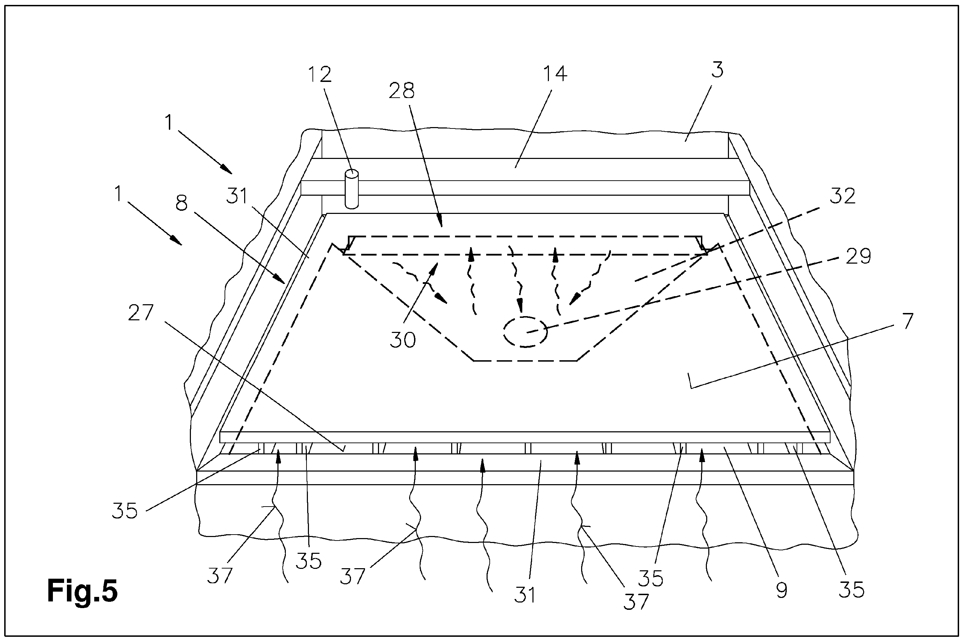

Durch die Verwendung der Lamellen 35 ist es nunmehr möglich, dass sehr große Werkstücke 7 bearbeitet werden können, die den gesamten Innenraum, insbesondere den Bearbeitungsraum 8, wie in Fig. 5 dargestellt, ausnützen, da die Luft für die Abgasvorrichtung 1 zwischen dem Werkstück 7 und dem Rahmen 31 eingesaugt werden kann, da aufgrund der Lamellen 35 das Werkstück 7 oberhalb des Rahmens 31 auf den Lamellen 35 positioniert ist, d.h., dass Luft 37, die sich mit den Abgasen 25 vermischt, von vorne eingesaugt wird, die anschließend unterhalb des Werkstücks 7 in Richtung der Absaugkanäle 28,30 auf der gegenüberliegenden Rückseite befördert werden, wo sich mit dem Abgasen 26 vermischen, worauf über die Absaugöffnungen 28,30 das Gemisch in den Absaugkanal 32 unterhalb der Auflagefläche 27 des Bearbeitungstisches 9 strömt und von dort über die Abzugsöffnung 29 abgesaugt und ins Frei transportiert wird, wie dies schematisch mit Pfeilen in Fig. 5 dargestellt ist..

Einen derartigen Laserplatter 1 kann man somit mit oder,nicht gemäß der Erfindung, ohne Lamellen 35 einsetzen, da die Luft 35 bzw. Abgase 25 immer über die Absaugöffnung 28 und/oder 30 vorzugsweise auf der Rückseite des Bearbeitungsraums 8, abgesaugt wird. Wesentlich ist, dass aufgrund der luftdichten Auflagefläche 27 des Bearbeitungstisches zwingend ein Luftstrom 26 über die Absaugöffnungen 28,30 und den Absaugkanal 32 unterhalb des Bearbeitungstisches 9 zur Abzugsöffnung 29, an der eine Absauganlage, insbesondere Pumpe, angeschlossen ist, gebildet wird, wobei dies auch bei sehr großen Werkstücken 7 bzw. Bauteilen der Fall ist.

Der Ordnung halber sei abschließend darauf hingewiesen, dass zum besseren Verständnis des Aufbaus des Gravurablaufes 1 und deren Komponenten bzw. dessen Bestandteile teilweise unmaßstäblich und/oder vergrößert und/oder verkleinert und vor allem nur schematisch dargestellt wurden.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen im Rahmen der beigefügten Ansprüche bilden.

## Patentansprüche

1. Laserplotter (2) zum Abarbeiten eines Jobs für das Schneiden, Gravieren, Markieren und/oder Beschriften eines vorzugsweise flachen Werkstückes (7), der zumindest ein Gehäuse mit einem Bearbeitungstisch (9) und mit einem vorzugsweise verschließbaren Bearbeitungsraum (8) zum Positionieren eines Werkstückes (7) auf dem Bearbeitungstisch (9), zumindest eine Strahlenquelle in Form eines Lasers (5,6), und eine Steuerung (13) zum Steuern des über vorzugsweise einen Riemenantrieb betriebenen Schlitten (14) mit daran verfahrbar angeordneter Fokussiereinheit (12), die zum Umlenken eines Laserstrahls (10) in Richtung Werkstück (7) ausgebildet ist, aufweist, wobei im Bearbeitungsraum (8) unterhalb des Bearbeitungstisches (9), insbesondere unterhalb einer Auflagefläche (27) des Bearbeitungstisches (9), eine Absaugvorrichtung (1) zum Absaugen der beim Laserprozess entstehenden Abgase (25) durch erzeugen eines Luftstroms (26) angeordnet ist, **dadurch gekennzeichnet, dass** der Bearbeitungstisch (9) derart ausgebildet ist, dass die Auflagefläche (27) des Bearbeitungstisches (9) vollflächig und luftdicht ausgebildet ist, und dass zur Bildung eines Luftstroms (26) unterhalb der Auflagefläche (27) vorzugsweise parallel zur Auflagefläche (27) ein Absaugkanal (32) angeordnet ist, der in einer Abzugsöffnung (29) endet, wobei der Absaugkanal (32) über zumindest eine Absaugöffnung (28,29) mit dem Bearbeitungsraum (8) zum Absaugen der beim Laserprozess entstehenden Abgase bzw. Dämpfe (25) verbunden ist, wobei der Bearbeitungsraum (8) mit einem Rahmen (31) begrenzt ist, und eine Abschlussplatte (33) unterhalb des Rahmens (31) angeordnet und vorzugsweise am Rahmen (31) befestigt ist, wobei in dem Rahmen (31) mehrere vorzugsweise parallel verlaufende Lamellen (35) angeordnet sind, sodass zwischen den Lamellen (35) ein Luftleitkanal (36) ausgebildet ist, wobei sich die Lamellen (35) von der Auflagefläche (27) über den Rahmen (31) hinaus erstrecken.

2. Laserplotter nach Anspruch 1, **dadurch gekennzeichnet, dass** parallel zur vollflächigen Auflagefläche (27) die Abschlussplatte (33) angeordnet ist, die durch entsprechende Ausbildung den Absaugkanal (32) bildet oder ein Absaugkanal (32) angeordnet ist.

3. Laserplotter nach Anspruch 1 oder 2, **dadurch gekennzeichnet, dass** in der Abschlussplatte (33) die Abzugsöffnung (29) angeordnet ist, wobei der Absaugkanal (32) vorzugsweise sich verjüngend zur Abzugsöffnung (29) ausgebildet ist.

4. Laserplotter nach einem der vorhergehenden Ansprüche, **dadurch gekennzeichnet, dass** die Abschlussplatte (33) in einer definierten Distanz zur Auflagefläche (27) angeordnet ist.

5. Laserplotter nach einem der vorhergehenden Ansprüche, **dadurch gekennzeichnet, dass** die Absaugöffnung 28,30 im Rahmen 31 und/oder in der Auflagefläche 27 integriert ist.

6. Laserplotter nach einem der vorhergehenden Ansprüche, **dadurch gekennzeichnet, dass** die Absaugöffnungen mit dem Absaugkanal unterhalb der Abschlussplatte verbunden ist, wobei der Absaugkanal mit der Absaugvorrichtung, insbesondere einen Absauggebläse zum Abführen des Luftstroms mit den Abgasen vom Laserprozess, über die Abzugsöffnung verbunden ist.

7. Laserplotter nach einem der vorhergehenden Ansprüche, **dadurch gekennzeichnet, dass** der Absaugkanal auf einen Teilbereich des Bearbeitungsraumes begrenzt ist.

8. Laserplotter nach einem der vorhergehenden Ansprüche, **dadurch gekennzeichnet, dass** die Abzugsöffnung im Zentrum unterhalb des Bearbeitungstische positioniert ist und ein Teil des Bearbeitungsfläche über Absperrelemente abgetrennt ist.

9. Laserplotter nach einem der vorhergehenden Ansprüche, **dadurch gekennzeichnet, dass** die Auflagefläche des Bearbeitungstisch oberhalb des Begrenzungsrahmens angeordnet ist.

10. Laserplotter nach einem der vorhergehenden Ansprüche, **dadurch gekennzeichnet, dass** die Luftleitkanäle, insbesondere die Lamellen, sich über eine Oberseite des Rahmens, insbesondere über eine Höhe von 5 bis 20mm, erstrecken.

11. Laserplotter nach einem der vorhergehenden Ansprüche, **dadurch gekennzeichnet, dass** die Lamellen gleichmäßig über die Bearbeitungsbreite der Auflagefläche verteilt angeordnet sind.

12. Laserplotter nach einem der vorhergehenden Ansprüche, **dadurch gekennzeichnet, dass** die Lamellen aus Plexiglas gebildet sind.

13. Laserplotter nach einem der vorhergehenden Ansprüche, **dadurch gekennzeichnet, dass** die Lamellen eine Dicke zwischen 2-10mm, vorzugsweise 5mm, aufweisen.

## Claims

1. Laser plotter (2) for processing a job for cutting, engraving, marking and/or lettering a preferably flat workpiece (7), comprising at least one housing (3) with a processing table (9) and with a preferably closable processing chamber (8) for positioning a workpiece (7) on the processing table (9), at least one beam source in the form of a laser (5,6), and a control unit (13) for controlling the carriage (14), which is preferably operated via a belt drive, with a focusing unit (12) arranged to be movable thereon and designed to deflect a laser beam (10) in the direction of the workpiece (7), wherein in the processing chamber (8) below the processing table (9), in particular below a support surface (27) of the processing table (9), an extraction device (1) for extracting the exhaust gases (25) produced during the laser process by generating an air flow (26) is arranged, **characterized in that** the processing table (9) is designed in such a way that the support surface (27) of the processing table (9) is designed to be airtight over the entire surface, and **in that**, in order to form an air flow (26), an extraction duct (32) is arranged below the support surface (27), preferably parallel to the support surface (27), which extraction duct ends in an extraction opening (29), whereby the extraction duct (32) is connected via at least one extraction opening (28,29) to the processing chamber (8) for extracting the exhaust gases or vapors (25), respectively, that are produced during the laser process, wherein the processing chamber (8) is delimited by a frame (31), and an end plate (33) is arranged below the frame (31) and preferably fastened to the frame (31), wherein a plurality of preferably parallel slats (35) are arranged in the frame (31), so that an air duct (36) is formed between the slats (35), wherein the slats (35) extend from the support surface (27) beyond the frame (31).

2. Laser plotter according to claim 1, **characterized in that** the end plate (33) is arranged parallel to the full-surface support surface (27) and forms the extraction channel (32) by means of an appropriate design, or an extraction channel (32) is arranged.

3. Laser plotter according to claim 1 or 2, **characterized in that** the exhaust opening (29) is arranged in the end plate (33), whereby the exhaust channel (32) is preferably designed to taper towards the exhaust opening (29).

4. Laser plotter according to any one of the preceding claims, **characterized in that** the end plate (33) is arranged at a defined distance from the support surface (27).

5. Laser plotter according to any one of the preceding claims, **characterized in that** the suction opening 28,30 is integrated into the frame 31 and/or into the support surface 27.

6. Laser plotter according to one of the preceding claims, **characterized in that** the extraction openings are connected to the extraction channel below the end plate, wherein the extraction channel is connected to the extraction device, in particular to an extraction fan, for discharging the air flow with the exhaust gases from the laser process via the exhaust opening.

7. Laser plotter according to any one of the preceding claims, **characterized in that** the extraction channel is limited to a partial area of the processing chamber.

8. Laser plotter according to any one of the preceding claims, **characterized in that** the exhaust opening is positioned in the center below the processing table, and a part of the processing area is separated via blocking elements.

9. Laser plotter according to any one of the preceding claims, **characterized in that** the support surface of the processing table is arranged above the delimiting frame.

10. Laser plotter according to any one of the preceding claims, **characterized in that** the air ducts, in particular the slats, extend over an upper side of the frame, in particular over a height of 5 to 20 mm.

11. Laser plotter according to any one of the preceding claims, **characterized in that** the slats are evenly distributed over the processing width of the support surface.

12. Laser plotter according to any one of the preceding claims, **characterized in that** the slats are made of acrylic glass.

13. Laser plotter according to any one of the preceding claims, **characterized in that** the slats have a thickness of between 2-10 mm, preferably 5 mm.

## Revendications

1. Laser à lit plat (2) pour l'exécution d'une tâche de découpe, de gravure, de marquage et/ou d'inscription d'une pièce à usiner de préférence plane (7), qui est constitué d'au moins un boîtier (3) avec un plateau de travail (9) et avec un espace de traitement (8) de préférence verrouillable pour le positionnement d'une pièce à usiner (7) sur le plateau de travail (9), présentant au moins une source de rayonnement sous forme d'un laser (5, 6), et une commande (13) pour la commande d'un chariot (14) actionné de préférence par un entraînement par courroie avec une unité de mise au point (12) mobile placée sur celui-ci, conçue pour dévier un faisceau laser (10) en direction de la pièce à usiner (7), un dispositif d'aspiration (1) étant disposé dans l'espace de traitement (8) au-dessous du plateau de travail (9), en particulier au-dessous d'une surface d'appui (27) du plateau de travail (9), pour l'aspiration des gaz (25) produits au cours du processus laser en générant un flux d'air (26), **caractérisé en ce que** le plateau de travail (9) est conçu de telle sorte que la surface d'appui (27) du plateau de travail (9) est conçue sur toute sa surface et de manière hermétique à l'air, et **en ce que**, pour la formation d'un flux d'air (26), un canal d'aspiration (32) est disposé au-dessous de la surface d'appui (27), de préférence parallèlement à la surface d'appui (27), se terminant par un orifice d'évacuation (29), le canal d'aspiration (32) étant relié, par le biais d'au moins un orifice d'aspiration (28, 29), à l'espace de traitement (8) pour l'aspiration des gaz ou vapeurs (25) produits au cours du processus laser, l'espace de traitement (8) étant délimité par un cadre (31), et une plaque d'obturation (33) étant disposée en dessous du cadre (31) et de préférence fixée au cadre (31), plusieurs lamelles (35) de préférence parallèles étant disposées dans le cadre (31), de sorte qu'un canal de guidage d'air (36) est formé entre les lamelles (35), les lamelles (35) s'étendant depuis la surface d'appui (27) au-delà du cadre (31).

2. Laser à lit plat selon la revendication 1, **caractérisé en ce que** la plaque d'obturation (33) est disposée parallèlement à la surface d'appui (27) pleine, laquelle forme le canal d'aspiration (32) par le biais d'une configuration correspondante ou comporte un canal d'aspiration (32).

3. Laser à lit plat selon la revendication 1 ou 2, **caractérisé en ce que** l'orifice d'évacuation (29) est disposé dans la plaque d'obturation (33), le canal d'aspiration (32) étant de préférence conçu avec un rétrécissement en direction de l'orifice d'évacuation (29).

4. Laser à lit plat selon l'une des revendications précédentes, **caractérisé en ce que** la plaque d'obturation (33) est disposée à une distance définie de la surface d'appui (27).

5. Laser à lit plat selon l'une des revendications précédentes, **caractérisé en ce que** l'orifice d'aspiration 28,30 est intégrée au cadre 31 et/ou à la surface d'appui 27.

6. Laser à lit plat selon l'une des revendications précédentes, **caractérisé en ce que** les orifices d'aspiration sont reliés au canal d'aspiration au-dessous de la plaque d'obturation, le canal d'aspiration étant relié au dispositif d'aspiration, en particulier un ventilateur d'aspiration pour l'évacuation du flux d'air avec les gaz du processus laser, via l'orifice d'évacuation.

7. Laser à lit plat selon l'une des revendications précédentes, **caractérisé en ce que** le canal d'aspiration est limité à une zone partielle de l'espace de traitement.

8. Laser à lit plat selon l'une des revendications précédentes, **caractérisé en ce que** l'orifice d'évacuation est positionné au centre, au-dessous du plateau de travail, et qu'une partie de la surface de traitement est séparée par des éléments de blocage.

9. Laser à lit plat selon l'une des revendications précédentes, **caractérisé en ce que** la surface d'appui du plateau de travail est disposée au-dessus du cadre de délimitation.

10. Laser à lit plat selon l'une des revendications précédentes, **caractérisé en ce que** les canaux de guidage d'air, notamment les lamelles, s'étendent sur une face supérieure du cadre, notamment sur une hauteur de 5 à 20 mm.

11. Laser à lit plat selon l'une des revendications précédentes, **caractérisé en ce que** les lamelles sont réparties de manière homogène sur la largeur de traitement de la surface d'appui.

12. Laser à lit plat selon l'une des revendications précédentes, **caractérisé en ce que** les lamelles sont constituées de Plexiglas.

13. Laser à lit plat selon l'une des revendications précédentes, **caractérisé en ce que** les lamelles possèdent une épaisseur comprise entre 2 et 10 mm, de préférence 5 mm.
